# EUROPEAN PATENT SPECIFICATION

(11) **EP 2 168 350 B1**
(45) Date of publication and mention of the grant of the patent: **20.12.2017**
(21) Application number: 08787704.9
(22) Date of filing: 11.07.2008
(51) Int. Cl.: H04L 29/06, H04L 29/08, H04W 88/02, H04W 4/00, H04W 8/24

(54) **METHODS OF EXCHANGING INFORMATION**
VERFAHREN ZUM AUSTAUSCH VON INFORMATIONEN
PROCÉDÉS D'ÉCHANGE D'INFORMATIONS

(30) Priority: 17.07.2007 FI 20075550
(43) Date of publication of application: 31.03.2010
(73) Proprietor: Telia Company AB, 169 94 Solna (SE)
(72) Inventor: TUOMELA, Frans, FI-00640 Helsinki (FI)
(74) Representative: Kolster Oy Ab
(86) International application number: PCT/FI2008/050427
(87) International publication number: WO 2009/010632

(56) References cited:
- EP-A1- 1 148 688
- EP-A1- 1 720 365
- WO-A1-2006/038839
- WO-A1-2006/048340
- US-A1- 2002 132 608
- US-A1- 2004 210 657
- US-A1- 2005 060 411
- US-A1- 2006 223 503
- Kundan Singh ET AL: "Interworking Between SIP/SDP and H.323", , 8 March 2000 (2000-03-08), XP055200672, Retrieved from the Internet: URL:http://academiccommons.columbia.edu/do wnload/fedora_content/download/ac:110364/C ONTENT/cucs-015-00.pdf
- ROSENBERG CISCO SYSTEMS J: "Presence Authorization Rules; draft-ietf-simple-presence-rules-07.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, vol. simple, no. 7, 9 June 2006 (2006-06-09), XP015045225, ISSN: 0000-0004

## Description

### FIELD OF THE INVENTION

The present invention relates to wireless communications systems.

### BACKGROUND OF THE INVENTION

IP Multimedia Subsystem (IMS) is a 3rd Generation Partnership Project (3GPP) standardised network architecture that provides an access network independent standardised interface for creating services, charging mechanisms and better Quality of Service (QoS) than best effort. Examples of the services that are implemented on IMS at the moment are PSTN functionality, push-to-talk, presence, instant messaging and video sharing. One of advantages gained by the IMS is the capability to offer simultaneous circuit switched (CS) call and packed based data connection in such a manner that the subscriber will perceive them as single service. This concept is also referred to as the Circuit Switched IMS Combinational Services (CSICS). The circuit switched CS call, e.g. in UMTS Terrestrial Radio Access Network (UTRAN) or in GSM/EDGE Radio Access Network (GERAN) guarantees very good Quality of Service with a large coverage area. The packet based data transfer service in turn provides great variety with transferred media. The idea of the Circuit Switched IMS Combinational Services (CSICS) is to combine simultaneously used CS call and IMS based services in such a manner that the subscriber will perceive them as single service. After the subscribers are registered to the IMS and a CS call has been established, the terminals exchange the terminal capabilities over the IMS domain with SIP signalling. The exchanged information may contain information about IMS media types supported, MSISDN and preferred SIP URI, ME Identifier, CS video and voice telephony capability, MMS version supported and other supported IMS based services or non-IMS based services. If the terminals support the necessary functionality, the terminals offer to the subscribers the possibility to add the IMS session to the existing CS call. If the IMS session is initiated, it is done as any other IMS session. Alternatively, a CS call is added to an existing IMS session.

WO 2006/048340 discloses a service resolution between a calling subscriber A and a called subscriber B of a telecommunications network.

EP 1 148 688 A1 discloses a solution where a proxy controller requests from a subscriber via a terminal the desired communication capabilities through signaling.

Kundan Singh et al: "Interworking between SIP/SDP and H.323", 8.3.2000, XP055200672, discloses that IWF finds a maximal intersection of the SIP user agent and H.323 terminal capability sets to limit the media description sent to the SIP side.

### DISCLOSURE OF THE INVENTION

An object of the present invention is to provide an enhanced mechanism for providing capability information of a remote party in a communication system. The object of the invention is achieved by the subject matter of the independent claims. The preferred embodiments of the invention are disclosed in the dependent claims.

According to an aspect of the invention, an exchange of common capability information of wireless communication terminals is improved by taking in account also capabilities of any adjacent external device(s) (e.g. PC and/or laptop) of an end-user. On the other words, the invention allows communication parties to see and use applications capabilities of their wireless communication terminals and adjacent external devices, e.g. during circuit-switched or packet-switched one-to-one call. Moreover, an aspect of the invention enables to transfer capability information of wireless terminals and a remote external device related capability information to an adjacent external device (e.g. PC or laptop) of end-user, and use this information in the adjacent external device to initiate other application sessions or transactions. According to a further aspect of the invention, in addition, visibility of the application capability related information to other communication parties is controlled in an intermediate network.

### BRIEF DESCRIPTION OF THE DRAWINGS

In the following the invention will be described in greater detail by means of preferred embodiments with reference to the attached drawings, in which
Figure 1 a diagram illustrating an example of a capability exchange according to an embodiment of the invention;
Figure 2 illustrates an example view displayed to the end-user;
Figure 3 a diagram illustrating another example of a capability exchange according to an embodiment of the invention;
Figure 4 is a diagram illustrating still another example of a capability exchange according to an embodiment of the invention;
Figure 5 is a diagram illustrating a still further example of a capability exchange according to an embodiment of the invention;
Figure 6 illustrates an example of a signalling scheme for implementing the application capability exchange according to an embodiment of the invention;
Figure 7 illustrates an example of a signalling scheme for implementing the connection establishment request for a specific application.

### DETAILED DESCRIPTION OF THE INVENTION

Example embodiment of the present invention will be described using simultaneous circuit switched (CS) call and IP Multimedia Subsystem (IMS) session as an example of the communications system architecture. This concept is also referred to as the Circuit Switched IMS Combinational Services (CSICS). The circuit switched CS call may be established for example in UMTS Terrestrial Radio Access Network (UTRAN) or in GSM/EDGE Radio Access Network (GERAN), or in any other suitable public land mobile network (PLMN). The invention is, however, intended to be restricted to any examples described herein.

A wireless communication terminal may refer to any wireless device. In the examples present below, the terminal is a wireless mobile terminal supporting IMS functionality via a PLMN. For example, the wireless communication terminal may be an UMTS or GSM/EDGE smart mobile terminal having S60 operating system from Nokia Inc. Thus, the application capabilities of the terminal could include native S60 applications available in the terminal.

An external data device may refer to any data running applications and communicating with an adjacent wireless communication terminal and further with a remote party, i.e. with a remote wireless terminal and/or remote external device. The external data device may be, for example, a personal computer (PC), a laptop computer, or any similar computing device. The application capabilities of the external device may be any application available in the device, such as a calendar, Windows NetMeeting, Windows Remote Desktop, and Windows Meeting Space. The communication link between a wireless terminal and an external data device may preferably be a short-range wireless link, such a Bluetooth link, a WiFi link, an infrared link, etc.

The intermediate CS entities may be any PLMN entities involving with the CS call establishment between the communication terminals.

In the IMS concept, the logical functions/units responsible for the call control in the intermediate network are called Call Session Control Functions (CSCF). The IMS function which the terminal will contact is called Proxy-CSCF (P-CSCF) and it is allocated to the subscriber during the IMS registration procedure. The P-CSCF is the only contact point for the subscriber to the IMS. This means that all the signalling traffic to or from the subscriber is routed via the P-CSCF. The P-CSCF determines the Interrogating CSCF (I-CSCF) located at the home domain of the subscriber. The P-CSCF also performs signalling compression/decompression and authorises bearer resources for the subscriber. The P-CSCF may be located either in the subscriber's home network or in the visiting network. The I-CSCF has three major tasks to perform. First it hides the topology of the subscriber's home network and second it allocates the Serving CSCF (S-CSCF) for the subscriber during the IMS registration procedure. The third task of the I-CSCF is to lookup the S-SCSF of the called subscriber in case of incoming session initiation request. In practice the I-CSCF is located in the subscriber's home network. The S-CSCF is the centre node of the IMS. The S-CSCF authenticates the subscriber by using authentication data retrieved from the HSS. After authentication of the subscriber the S-CSCF binds the user's current IP address and the subscriber identity until the subscriber is deregistered from the IMS. The S-CSCF also informs the HSS about the changes of the registration state of the subscriber. Other task of the S-CSCF is to trigger the services when required. For this purpose the S-CSCF retrieves the subscriber related filter criteria information from the HSS, which it then uses to detect if certain application is to be evoked during the IMS procedures. The S-CSCF also prevents the subscriber for performing unauthorized operations. The S-CSCF is typically located in the subscriber's home network. In the examples herein, all Call Session Control Functions (CSCFs) are referred to as one entity, P/I/S-CSCF, for simplicity.

The Session Initiation Protocol (SIP) performs the session control in the IMS. SIP is a control protocol that may be used for establishing, modifying, and terminating multimedia sessions. With SIP it is possible to invite new participants to the existing sessions and modify the media of the existing session. SIP defines the following entities: User Agent Client (UAC), User Agent Server (UAS), registrar, redirect server and proxy server. The UAC and the UAS are the endpoints of SIP signalling. The registrar stores the location information of the user. The proxy servers route the message toward the destination and the redirect server informs the sending party about the destination the message should have been sent to. SIP works with SIP dialogs between UAC and UAS. One SIP dialog may contain several transactions, which in turn contain one SIP request and usually one or more SIP responses.

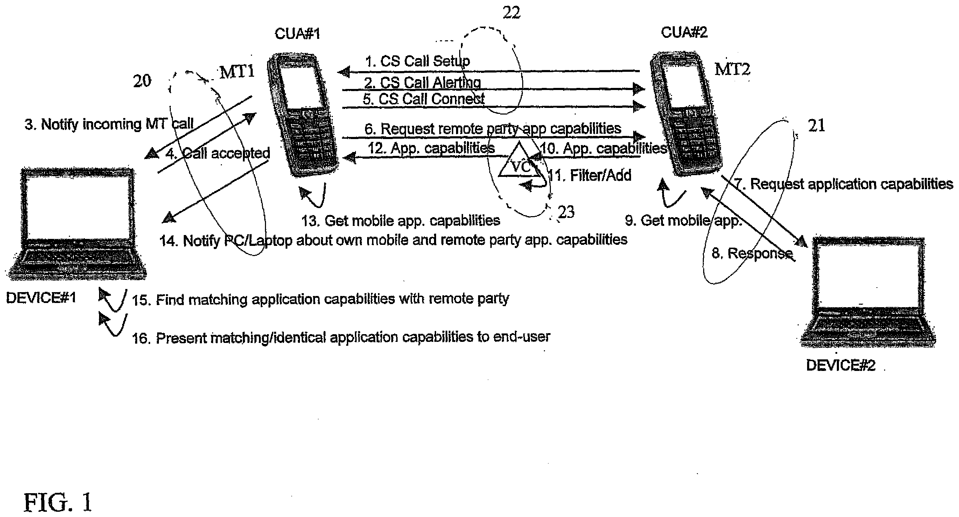

An example of a capability exchange according to an embodiment of the invention is now described with reference to Figure 1.

Let us first assume that users have already registered to the IMS. Let us further assume that a CSI user agent CUA#2 run in the mobile terminal MT2 starts the circuit switched (CS) call towards a CSI user agent CUA#1 run in the mobile terminal MT1 by sending out a CS SETUP message, step 1 in Figure 1. CUA#1 receives the SETUP message and sends an ALERTING message towards CUA#2 to inform that the call is being processed, step 2. CUA#1 then notifies the end-user about the incoming mobile terminating (MT) call through a user interface (UI) of the mobile terminal MT1. In addition, CUA#1 notifies an adjacent external device (e.g. a laptop) DEVICE#1 about the incoming call via a short-range wireless link 20 (e.g. Bluetooth), step 3. In this case, it is assumed that the end-user's external device DEVICE#1 is in range and already connected to CUA#1.

When DEVICE#1 receives the incoming call notification from CUA#1, DEVICE#1 informs the end-user about the incoming call. After that the end-user accepts or rejects the incoming call from DEVICE#1. It has to be noted that the end-user may accept or reject the incoming call in DEVICE#1 or CUA#1. After the end-user has accepted the call (step 4), the CS call is connected between CUA#1 and CUA#2, step 5.

After the CS call has been established over an intermediate circuit-switched (CS) network 22, CUA#1 requests remote party application capabilities over an intermediate IM core network (CN) 23, e.g. by sending SIP OPTIONS request to CUA#2, step 6. After CUA#2 has received the application capabilities request from CUA#1, CUA#2 requests application capabilities from an adjacent external device DEVICE#2 (e.g. a laptop) that is in range and already connected via a short-range wireless link 21, step 7. In DEVICE#2, application logic detects and returns application capabilities information of DEVICE#2 (e.g. p2p applications, Windows NetMeeting, Windows Remote Desktop, and Windows Meeting Space) to CUA#2, step 8. The description of application capabilities may include also information if a specific application capability is already active (i.e. a running application) or inactive in DEVICE#2.

In CUA#2, a specific application logic detects the own application capabilities of CUA#2/mobile terminal MT2, step 9. CUA#2 sends a response (e.g. a SIP 200 OK response with SDP (Session Description Protocol)) carrying the application capabilities information of CUA#2/mobile terminal MT2 and the external device DEVICE#2 to CUA#1, step 10. The description of application capabilities may include information if a specific application capability is already active (i.e. running) or inactive in DEVICE#2 and/or CUA#2.

According to an embodiment of the invention, a network entity in the intermediate IMS CN network, which is generally referred to as a visibility control (VC) herein, may filter the application capabilities information of CUA#2/mobile terminal MT2 and the external device DEVICE#2 based on predetermined visibility rules of the remote end-user of DEVICE#2 (the calling remote party), step 11. In other words, the visibility control VC may prevent some of the capabilities information from being forwarded to CUA#1. In addition, VC or some other network element may add further services, such as permanent service(s) of the remote end-user into the capability list (e.g. a flick service or a web blog) in step 11.

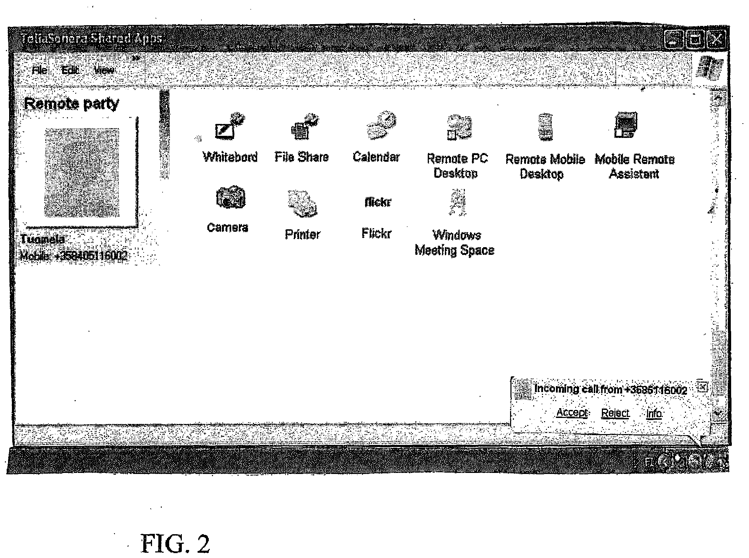

CUA#1 receives the application capabilities information of the remote party from CUA#2 via the visibility control VC, step 12, and detects the own application capabilities of CUA#1/mobile terminal MT1, step 13. CUA#1 sends the application capabilities information (e.g. a list) of CUA#1, CUA#2 and DEVICE#2) to DEVICE#1 over the short-range wireless link 20, step 14. In DEVICE#1, special application logic tries to find matching/identical application capabilities with the remote party (CUA#2, DEVICE#2), and application capabilities (e.g. a web blog) that can be used from DEVICE#1, step 15. The special application login presents matching (shared) application capabilities to the end-user of DEVICE#1 (the called party), step 16. An example view displayed to the end-user is illustrated in Figure 2. The end-user may now start to use one or more of the matching applications in the session with the remote party.

The calling party (i.e. CUA#2) may also execute application capability exchange by sending specific a request to the called party (e.g. SIP OPTIONS request). On the other words, the steps 6 to 16 described above may further be performed in the reverse rejection, i.e. the calling party CUA#2/DEVICE#2 may executes further steps corresponding to steps 6 and 12 - 16, and the called party CUA#1/DEVICE#1 may perform further steps corresponding to step 7-10. Still further, the visibility control VC may again perform the filtering/adding to the application capabilities of the called end-user based on predetermined filtering rules.

As stated in step 8 and 10, the description (or list) of application capabilities may include information about status of a specific application capability (e.g. whether the application is active or inactive). In the case the status of a specific application capability is inactive, the installed application has to be started up before its usage is possible. For example, Windows NetMeeting application may be installed to DEVICE#2, but it is not up and running, and therefore connection establishment from the other party (e.g. DEVICE#1) is not possible. Therefore, the end-user of DEVICE#1 may request to start up the specific application in DEVICE#2 (e.g. by sending SIP REFER request from DEVICE#1 to DEVICE#2 via CUA#1 and CUA#2). Moreover, this request may also include option to initiate connection establishment (e.g. Windows NetMeeting session) from DEVICE#2 to DEVICE#1 (also known as a callback).

It has to be noted that the application capability exchange can be done even if the called party rejects the incoming call. Further, the application capability exchange can be re-executed at any time during a call (e.g. when terminal capabilities have been changed in CUA#2/DEVICE#2). In addition, the exchange of application capabilities may be done outside of a circuit-switched or packet-switched call. For example, the application capability exchange may be initiated from the end-user's call log/history.

In an embodiment of the invention, CUA#1 may include its own application capabilities and the applications capabilities of DEVICE#2 to the capability request (e.g. by sending SIP OPTIONS method with SDP to CUA#2) in step 6. In such embodiment, CUA#2 does not have to separately request the application capabilities from CUA#1.

In an embodiment of the invention the visibility control VC may reuse the end-user's presence rules (that are based on OMA (Open Mobile Alliance) definitions) as visibility rules.

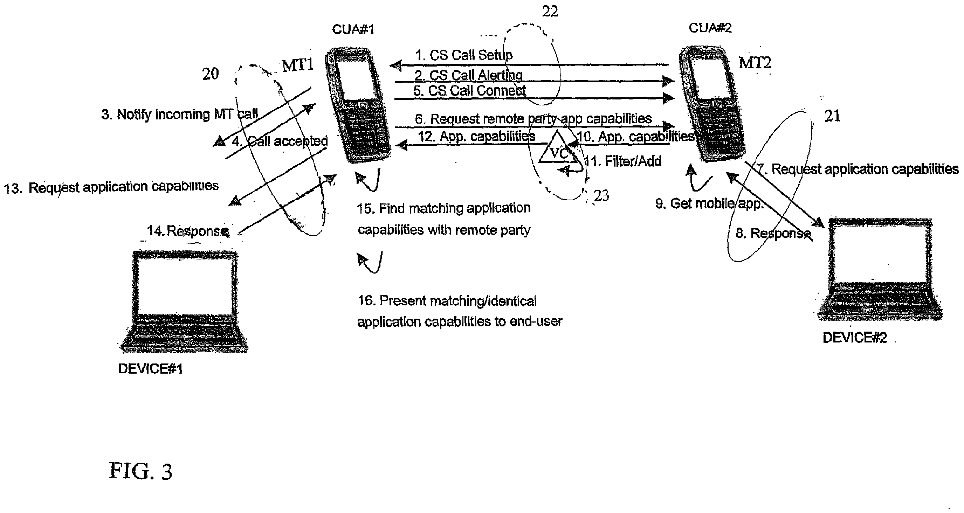

Another example of a capability exchange according to an embodiment of the invention is now described with reference to Figure 3. In Figure 3, process steps 1-12 similar to steps 1-12 in connection with Figure 1. However, in this example embodiment, steps 13-16 are modified such that CUA#1 may request application capabilities from DEVICE#1, step 13. Upon receiving the application capabilities of DEVICE#1, step 14 the special application logic in CUA#1 tries to find matching application capabilities with the remote party, step 15, and presents matching (shared) application capabilities to the called end-user (in place of DEVICE#2), step 16.

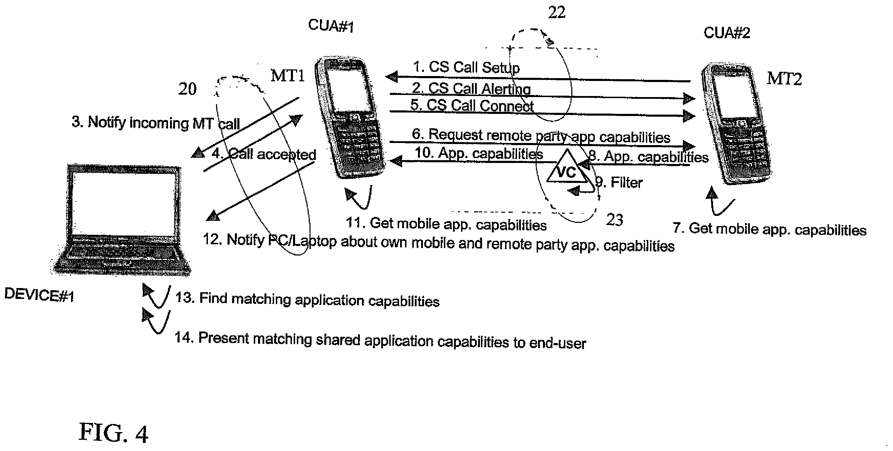

Still another example of a capability exchange according to an embodiment of the invention is now described with reference to Figure 4.

In Figure 4, a CS call is established between CUA#1 and CUA#2 through an intermediate CS network 22, steps 1-5, in a similar manner as described regarding steps 1-5 in Figure 1. After the CS call has been established over an intermediate circuit-switched (CS) network 22, CUA#1 requests remote party application capabilities over an intermediate IM core network (CN) 23, e.g. by sending SIP OPTIONS request to CUA#2, step 6. At the time CUA#2 receives the application capabilities request from CUA#1, there is no adjacent external device (e.g. a laptop) connected via a short-range wireless link. Therefore, CUA#2 is not able to request application capabilities from any external device but a specific application logic detects the own application capabilities of CUA#2/mobile terminal MT2, step 7. CUA#2 sends a response (e.g. a SIP 200 OK response with SDP (Session Description Protocol)) carrying the application capabilities information of CUA#2/mobile terminal MT2 to CUA#1, step 10. The description of application capabilities may include information if a specific application capability is already active (i.e. running) or inactive in CUA#2.

According to an embodiment of the invention, a network entity in the intermediate IMS CN network 23, which is generally referred to as a visibility control (VC) herein, may filter and/or the application capabilities information of CUA#2/mobile terminal MT2 based on predetermined visibility rules of the remote end-user of CUA#2 (the calling remote party), step 9, in a similar manner as described regarding step 11 in Figure 1.

CUA#1 receives the application capabilities information of the remote party from CUA#2 via the visibility control VC, step 10, detects the own application capabilities of CUA#1/mobile terminal MT1, step 11. CUA#1 sends the application capabilities information (e.g. a list) of CUA#1 and CUA#2 to DEVICE#1 over the short-range wireless link 20, step 12. In DEVICE#1, special application logic tries to find matching/identical application capabilities with the remote party (CUA#2), and application capabilities (e.g. a web blog) that can be used from DEVICE#1, step 13. The special application login presents matching (shared) application capabilities to the end-user of DEVICE#1 (the called party), step 15. The end-user may now start to use one or more of the matching applications in the session with the remote party. Further, similarly as described in connection with Figure 1, the calling party (i.e. CUA#2) may also execute application capability exchange in a reverse direction by sending specific a request to the called party (e.g. SIP OPTIONS request). Further, similarly as described with reference to Figure 1, DEVICE#1/CUA#1 may remotely start the matching but currently inactive application(s) in DEVICE#2/CUA#2.

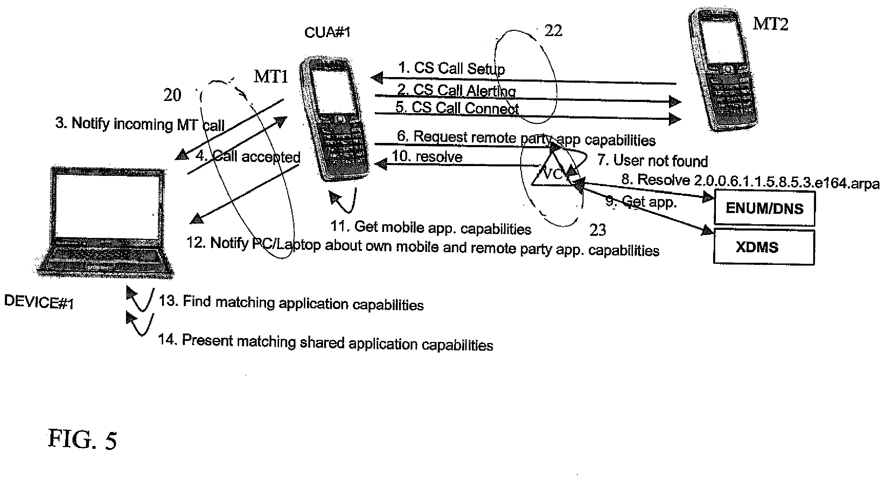

A still further example of a capability exchange according to an embodiment of the invention is now described with reference to Figure 5. In Figure 5, a CS call is established between CUA#1 and CUA#2 through an intermediate CS network 22, steps 1-5, in a similar manner as described regarding steps 1-5 in Figure 1. After the CS call has been established over an intermediate circuit-switched (CS) network 22, CUA#1 requests remote party application capabilities over an intermediate IM core network (CN) 23, e.g. by sending SIP OPTIONS request to CUA#2, step 6. However, in step 7, the IM core network 23 cannot find the end-user of the CUA#2, for example because the end-user of the CUA#2 does not have IMS subscription, and therefore do not have a SIP URI which is used for routing in the IMS. It is also possible that the IM core network 23 cannot find the end-user of the CUA#2, in step 7, because the end-user of the CUA#2 is not currently registered to IMS.

Therefore, according to an embodiment of the invention, a network entity in the intermediate IMS CN network 23, which is generally referred to as a visibility control (VC) herein, may attempt to retrieve application capability information for the end-user of MT2 from at least one network server based on a user's identity, network address, telephone number, or like. Examples of suitable network servers include a domain name service (DNS) server, an electronic numbering (ENUM) service server, or an XML document data management server (XDMS). Electronic Numbering (ENUM) is a protocol developed by the Internet Engineering Task Force (IETF) to allow the Public Switched Telephone Network (PSTN) and the Internet to interoperate. ENUM allows telephone numbers (such as E.164 numbers) to be mapped to Uniform Resource Identifiers (URIs) using a Domain Name System (DNS)-based architecture. ENUM transforms the telephone number - the most basic and commonly used communications address - into a universal identifier that can be used across many different devices and applications (voice, fax, mobile, email, text messaging, location-based services and the Internet). More specifically, so-called URIs are resolved from the telephone number of MT2 by reversing the telephone number and placing dots after each digit. Then as a domain name, the "e164.arpa" is placed at the end of the string. Thus, in the example of Figure 4, the VC translates the number +358405116002 (in accordance with the rule described in IETF RFC 3761) into the ENUM domain 2.0.0.6.1.1.5.8.5.3.e164.arpa, and then the VC sends, step 8, a query to the DNS, the query containing the ENUM domain thereby requesting the DNS to look up the ENUM domain. As a query result, the DNS returns Naming Authority Pointer Resource (NAPTR) records which describe mapping from E.164 number to URIs. In other words, the reply from the DNS will contain information on the application capabilities of the user of MT2, such as the email and instant message. Further, the query result may also contain an URI that refers to a specific XDM application. The VC may use the URI of the specific XDM application to retrieve XML document/list which presents application capabilities of the user of the MT2, step 9. The VC sends the retrieved application capabilities information to CUA#1(e.g. by sending SIP 200 response with SDP), step 10.

CUA#1 receives the application capabilities information of the remote party from CUA#2 via the visibility control VC, and detects the own application capabilities of CUA#1/mobile terminal MT1, step 11. CUA#1 sends the application capabilities information (e.g. a list) of CUA#1 and the end-user of MT2 to DEVICE#1 over the short-range wireless link 20, step 12. In DEVICE#1, special application logic tries to find matching/identical application capabilities with the remote party (MT2), and application capabilities (e.g. a web blog) that can be used from DEVICE#1, step 13. The special application login presents matching (shared) application capabilities to the end-user of DEVICE#1 (the called party), step 15. The end-user may now start to use one or more of the matching applications in the session with the remote party.

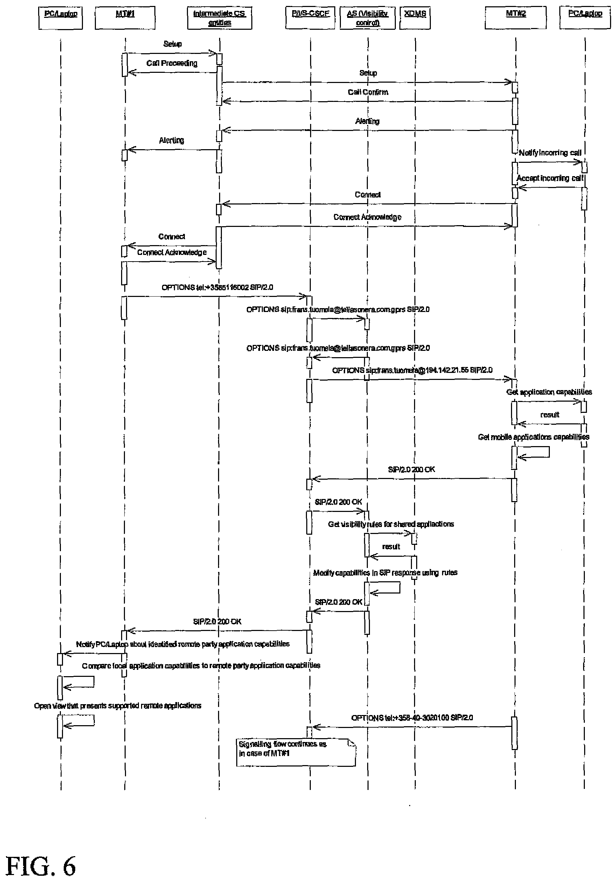

Figure 6 illustrates an example of a more detailed signalling scheme for implementing the application capability exchange according to an embodiment of the invention. In this example, the visibility control entity VC is situated at an application server (AS). In this example, all Call Session Control Functions (CSCFs) are referred to as one entity, P/I/S-CSCF, for simplicity.

MT1 initiates a CS call by sending a Setup message to intermediate CS entities that acknowledge the receipt by sending a Call Proceeding message. The CS entities send a Setup message further to MT2 that acknowledges by sending Call Confirm and Alerting messages to the CS entities. An alerting message is sent further to MT1. MT2 notifies the incoming call to an adjacent external device (e.g. PC or laptop) that accepts the incoming call. Connect and Connect Acknowledge messages are exchanged first between MT2 and the CS entities, and then between the CS entities and MT1. As a result a CS call has been setup.

MT1 requests application capabilities by sending an OPTIONS tel:+3585116002 SIP/2.0 message to P/I/S-CSCF that forwards an OPTIONS sip:frans.tuomela@teliasonera.com.gprs SIP/2.0 message to the Application server AS. After that the AS initiates (in SIP Back-to-Back User Agent mode) a new OPTIONS sip:frans.tuomela@teliasonera.com.gprs SIP/2.0 message back to S-CSCF. P/I/S-CSCF forwards an OPTIONS sip:frans.tuomela@194.142.21.55 SIP/2.0 message to MT2 (194.142.21.55 being the SIP URI of the end-user) that gets application capabilities from the adjacent PC/laptop and gets its own mobile applications capabilities. The obtained application capabilities of MT2 and the remote PC/laptop are sent in a SIP/2.0 200 OK message to P/I/S-CSCF and further with a SIP/2.0 200 OK message to AS. AS retrieves visibility rules for shared applications of the remote-end user from an XDMS server, and modifies capabilities in the SIP response using these rules. The modified application capabilities are sent with a SIP/2.0 200 OK message to P/I/S-CSCF and further with a SIP/2.0 200 OK message to MT1. MT1 notifies an adjacent external device (e.g. PC/laptop) about the application capabilities of the remote party as well as the application capabilities of its own. PC/laptop compares its local application capabilities to the application capabilities of the remote party and opens a view that presents the supported remote applications to the end-user. Also MT2 may request application capabilities of the user of MT1 by sending an OPTIONS tel:+358-40-3020100 message to P/I/S-CSCF. After that the signaling flow may continue as in case of MT1 above.

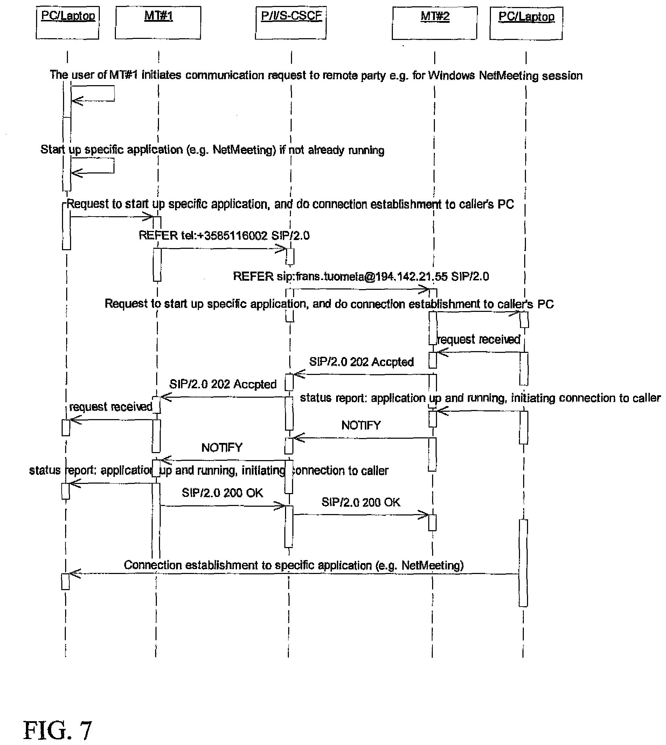

Figure 7 illustrates an example of a more detailed signalling scheme for implementing the connection establishment request for a specific application in a situation (e.g. after the application capability exchange shown in Figure 6) where the user of MT#1 wants to use a specific application (e.g. Windows NetMeeting) that is installed to both PCs, but applications are not up and running (i.e. status inactive). Firstly, the user of the PC/laptop (and MT1) initiates a communication request to the remote party e.g. for a Windows NetMeeting session. The PC/laptop starts up the specific application (e.g. the NetMeeting application) if it is not already running. The PC/laptop sends to MT1 a request to start up the specific application and perform connection establishment to the PC/laptop of the remote party. MT1 sends a REFER tel:+3585116002 SIP/2.0 message to P/I/S-CSCF that sends then a REFER sip:frans.tuomela@194.142.21.55 SIP/2.0 message to MT2. MT2 request the adjacent PC/laptop to start up the specific application and to establish a connection to the caller. The PC/laptop acknowledges the received request, MT2 acknowledges with a SIP/2.0 202 Accepted message to P/I/S-CSCF, P/I/S-CSCF acknowledges with a SIP/2.0 202 Accepted message to MT1, and MT1 notifies the adjacent PC/laptop that the request has been received. The remote PC/laptop sends to MT2 a status report indicating that the application is up and running and initiates the connection to the caller. MT2 sends a NOTIFY message to P/I/S-CSCF, P/I/S-CSCF forwards a NOTIFY to MT1, and MT1 sends a status report indicating the application is up and running and initiates a connection to the caller. Then MT1 acknowledges with a SIP/2.0 200 OK to P/I/S-CSCF, and P/I/S-CSCF acknowledges with a SIP/2.0 200 OK to MT2. Then the connection is established for the specific application (e.g. Windows NetMeeting).

The techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

It will be obvious to a person skilled in the art that, as the technology advances, the inventive concept can be implemented in various ways. The invention and its embodiments are not limited to the examples described above but may vary within the scope of the claims.

## Claims

1. A method of exchanging application capability information in a communication system, the method comprising:
a network unit (VC) of the communication system receiving from a remote wireless communication terminal (MT2) the application capability information of the remote wireless communication terminal (MT2); and
the network unit (VC) processing the received application capability information by filtering the received application capability information according to predetermined visibility control rules of the end-user of the remote wireless communication terminal (MT2) to prevent some of the capabilities information from being forwarded to the first wireless communication terminal (MT1); and
the network unit (VC) sending the processed application capability information to the first wireless communication terminal (MT1), wherein the method comprises reusing presence rules of the end-user as the visibility control rules.

2. A method as claimed in claim 1, comprising adding the received application capability information a further capability information that includes one or more of the following: an email address, a web site, a web log, an URL, an IP address.

3. A method as claimed in claim 1 or 2, comprising
detecting that application capability information cannot be requested from a second remote wireless communication terminal,
retrieving application capability information for a user of the second remote wireless communication terminal from at least one network server based on a user's identity, network address or telephone number,
sending the retrieved application capability information to the first wireless communication terminal (MT1).

4. A method as claimed in claim 3, comprising adding the received application capability information said further capability information that includes one or more of the following: an email address, a web site, a web log, an URL, an IP address.

5. A method as claimed in claim 3 or 4, wherein said at least one network server comprises one or more of the following: a domain name service (DNS) server, an electronic numbering (ENUM) service server, an XLM data management server (XDMS).

6. A method as claimed in any one of claims 1 to 5, wherein said network unit comprises a call server control function (CSCF).

7. A method as claimed in any one of claims 1 to 6, comprising
the first wireless communication terminal (MT1) requesting application capability information from the remote wireless communication terminal (MT2) via the network unit (VC),
the first wireless communication terminal (MT1) receiving application capability information of the remote wireless communication terminal (MT2) as well as application capability information of a remote external device (DEVICE #2) located in the neighbourhood of the remote wireless communication terminal (MT2),
the first wireless communication terminal (MT1) sending the application capability information of the remote wireless communication terminal (MT2), the application capability information of the remote external device (DEVICE #2), and application capability information of the first wireless communication terminal to an adjacent external device (DEVICE #1) located in the neighbourhood of the first wireless communication terminal (MT1) over a short-range wireless link.

8. A method as claimed in claim 7, wherein the application capability information includes information about specific application capability status.

9. A method as claimed in claim 8, comprising
the first wireless communication terminal (MT1) sending a request to start up an application having an inactive status in the remote wireless communication terminal (MT2) and/or in the remote external device (DEVICE #2), preferably in response to a message received from the adjacent external device (DEVICE #1).

10. A method as claimed in claim 7, comprising
the adjacent external data device (DEVICE #1) determining, based on the received application capability information, those application capabilities of the adjacent external data device which match with the application capabilities indicated by the received application capability information,
the adjacent external data device presenting the matching application capabilities to a user of the adjacent external data device.

11. A method as claimed in claim 10, comprising
the adjacent external data device (DEVICE #1) sending, to the first wireless communication terminal (MT1), a request to start a matching application in the remote wireless communication terminal (MT2) and/or in the remote external data device (DEVICE #2).

12. A method as claimed in claim 9 or 10, comprising
the adjacent external data device (DEVICE #1) receiving, via the first wireless communication terminal, a request to start an application,
the adjacent external data device (DEVICE #1) starting the requested application either directly or if the user accepts the request.

13. A data storage medium containing an executable program code which performs the steps of any one of method claims 1 to 12 when executed in a computing device.

14. A network unit for a communication system, said network unit comprising means for implementing the steps of any one of claims 1 to 5.

15. A communication arrangement comprising the wireless communication terminal, a network unit and an external data device for performing steps of any of claims 1 to 12.

## Patentansprüche

1. Verfahren zum Austauschen von Anwendungsfähigkeitsinformationen in einem Kommunikationssystem, wobei das Verfahren umfasst:
Empfangen der Anwendungsfähigkeitsinformationen eines entfernten, drahtlosen Kommunikationsendgeräts (MT2) von dem entfernten, drahtlosen Kommunikationsendgerät (MT2) durch eine Netzwerkeinheit (VC) des Kommunikationssystems; und
Verarbeiten der empfangenen Anwendungsfähigkeitsinformationen durch Filtern der empfangenen Anwendungsfähigkeitsinformationen nach vorbestimmten Sichtbarkeitsteuerungsregeln des Endbenutzers des entfernten, drahtlosen Kommunikationsendgeräts (MT2), um zu verhindern, dass manche der Fähigkeitsinformationen an das erste drahtlose Kommunikationsendgerät (MT1) weitergeleitet werden, durch die Netzwerkeinheit (VC); und
Senden der verarbeiteten Anwendungsfähigkeitsinformationen an das erste drahtlose Kommunikationsendgerät (MT1) durch die Netzwerkeinheit (VC),
wobei das Verfahren Wiederverwenden von Anwesenheitsregeln des Endbenutzers als die Sichtbarkeitsteuerungsregeln umfasst.

2. Verfahren nach Anspruch 1, umfassend Beifügen der empfangenen Anwendungsfähigkeitsinformationen einer weiterer Fähigkeitsinformation, die eines oder mehrere von den Folgenden aufweist: eine E-Mail-Adresse, eine Website, ein Weblog, eine URL, eine IP-Adresse.

3. Verfahren nach Anspruch 1 oder 2, umfassend
Detektieren, dass die Anwendungsfähigkeitsinformationen von einem zweiten entfernten, drahtlosen Kommunikationsendgerät nicht angefragt werden können,
Abfragen von Anwendungsfähigkeitsinformationen für einen Benutzer von dem zweiten entfernten, drahtlosen Kommunikationsendgerät von zumindest einem Netzwerkserver basierend auf einer Kennung, Netzwerkadresse oder Telefonnummer eines Benutzers,
Senden der abgerufenen Anwendungsfähigkeitsinformationen an das erste drahtlose Kommunikationsendgerät (MT1).

4. Verfahren nach Anspruch 3, umfassend Beifügen der empfangenen Anwendungsfähigkeitsinformation der weiteren Fähigkeitsinformation, die eines oder mehrere von den Folgenden umfasst: eine E-Mail-Adresse, eine Website, ein Weblog, eine URL, eine IP-Adresse.

5. Verfahren nach Anspruch 3 oder 4, wobei der zumindest eine Netzwerkserver eines oder mehrere von den Folgenden umfasst: ein Domain-Name-Service- (DNS) Server, ein elektronische Nummerierung (ENUM) Service-Server, ein XLM-Daten-Management-Server (XDMS).

6. Verfahren nach einem der Ansprüche 1 bis 5, wobei die Netzwerkeinheit eine Anrufserversteuerungsfunktion (CSCF) umfasst.

7. Verfahren nach einem der Ansprüche 1 bis 6, umfassend
Anfragen von Anwendungsfähigkeitsinformationen von dem entfernten, drahtlosen Kommunikationsendgerät (MT2) über die Netzwerkeinheit (VC) durch das erste drahtlose Kommunikationsendgerät (MT1),
Empfangen von Anwendungsfähigkeitsinformationen von dem entfernten, drahtlosen Kommunikationsendgerät (MT2) sowie Anwendungsfähigkeitsinformationen von einer entfernten, externen Vorrichtung (DEVICE #2), die sich in der Nachbarschaft von dem entfernten, drahtlosen Kommunikationsendgerät (MT2) befindet, durch das erste drahtlose Kommunikationsendgerät (MT1),
Senden der Anwendungsfähigkeitsinformationen des entfernten, drahtlosen Kommunikationsendgeräts (MT2), der Anwendungsfähigkeitsinformationen der entfernten, externen Vorrichtung (DEVICE #2) und Anwendungsfähigkeitsinformationen des ersten drahtlosen Kommunikationsendgeräts an eine benachbarte externe Vorrichtung (DEVICE #1), die sich in der Nachbarschaft des ersten drahtlosen Kommunikationsendgeräts (MT1) befindet, über eine drahtlose Nahbereichsverbindung durch das erste drahtlose Kommunikationsendgerät (MT1).

8. Verfahren nach Anspruch 7, wobei die Anwendungsfähigkeitsinformationen Informationen über einen spezifischen Anwendungsfähigkeitsstatus aufweisen.

9. Verfahren nach Anspruch 8, umfassend
Senden einer Anfrage zum Starten einer Anwendung mit einem inaktiven Status in dem entfernten, drahtlosen Kommunikationsendgerät (MT2) und/oder in der entfernten, externen Vorrichtung (DEVICE #2), bevorzugt als Reaktion auf eine von der benachbarten externen Vorrichtung (DEVICE #1) empfangenen Nachricht, durch das erste drahtlose Kommunikationsendgerät (MT1).

10. Verfahren nach Anspruch 7, umfassend
Bestimmen, basierend auf den empfangenen Anwendungsfähigkeitsinformationen, derjenigen Anwendungsfähigkeiten von der benachbarten externen Datenvorrichtung, die zu den Anwendungsfähigkeiten passen, die durch die empfangenen Anwendungsfähigkeitsinformationen angezeigt werden, durch die benachbarte externe Datenvorrichtung (DEVICE #1),
Präsentieren der passenden Anwendungsfähigkeiten an einen Benutzer von der benachbarten externen Datenvorrichtung durch die benachbarte externe Datenvorrichtung.

11. Verfahren nach Anspruch 10, umfassend
Senden einer Anfrage zum Starten einer passenden Anwendung in dem entfernten, drahtlosen Kommunikationsendgerät (MT2) und/oder in der entfernten, externen Datenvorrichtung (DEVICE #2) an das erste drahtlose Kommunikationsendgerät (MT1) durch die benachbarte externe Datenvorrichtung (DEVICE #1).

12. Verfahren nach Anspruch 9 oder 10, umfassend
Empfangen einer Anfrage zum Starten einer Anwendung über das erste drahtlose Kommunikationsendgerät durch die benachbarte externe Datenvorrichtung (DEVICE #1),
Starten der angefragten Anwendung, entweder direkt oder wenn der Benutzer die Anfrage akzeptiert, durch die benachbarte externe Datenvorrichtung (DEVICE #1).

13. Datenspeichermedium, das einen ausführbaren Programmcode aufweist, der die Schritte von einem der Verfahrensansprüche 1 bis 12 durchführt, wenn er in einer Computervorrichtung ausgeführt wird.

14. Netzwerkeinheit für ein Kommunikationssystem, wobei die Netzwerkeinheit Mittel zum Implementieren der Schritte von einem der Ansprüche 1 bis 5 umfasst.

15. Kommunikationsanordnung umfassend das drahtlose Kommunikationsendgerät, eine Netzwerkeinheit und eine externe Datenvorrichtung zum Durchführen der Schritte von einem der Ansprüche 1 bis 12.

## Revendications

1. Procédé d'échange d'informations de capacité d'application dans un système de communication, le procédé comprenant :
la réception, par une unité de réseau (VC) du système de communication à partir d'un terminal de communication sans fil distant (MT2), des informations de capacité d'application du terminal de communication sans fil distant (MT2) ; et
le traitement, par l'unité de réseau (VC), des informations de capacité d'application reçues en filtrant les informations de capacité d'application reçues en fonction de règles de commande de visibilité prédéterminées de l'utilisateur final du terminal de communication sans fil distant (MT2) pour empêcher que certaines des informations de capacité soient transmises au premier terminal de communication sans fil (MT1) ; et
l'envoi, par l'unité de réseau (VC), des informations de capacité d'application traitées au premier terminal de communication sans fil (MT1),
dans lequel le procédé comprend la réutilisation de règles de présence de l'utilisateur final comme les règles de commande de visibilité.

2. Procédé selon la revendication 1, comprenant l'ajout des informations de capacité d'application reçues à d'autres informations de capacité qui comprennent un ou plusieurs des éléments suivants : une adresse de courrier électronique, un site Web, un journal Web, une URL, une adresse IP.

3. Procédé selon la revendication 1 ou 2, comprenant
la détection que les informations de capacité d'application ne peuvent pas être demandées à partir d'un deuxième terminal de communication sans fil distant,
la récupération d'informations de capacité d'application pour un utilisateur du deuxième terminal de communication sans fil distant à partir d'au moins un serveur de réseau sur la base d'une identité, d'une adresse de réseau ou d'un numéro de téléphone de l'utilisateur,
l'envoi des informations de capacité d'application récupérées au premier terminal de communication sans fil (MT1).

4. Procédé selon la revendication 3, comprenant l'ajout des informations de capacité d'application reçues auxdites autres informations de capacité qui comprennent un ou plusieurs des éléments suivants : une adresse de courrier électronique, un site Web, un journal Web, une URL, une adresse IP.

5. Procédé selon la revendication 3 ou 4, dans lequel ledit au moins un serveur de réseau comprend un ou plusieurs des éléments suivants : un serveur de service de noms de domaines (DNS), un serveur de service de numérotation électronique (ENUM), un serveur de gestion de données XLM (XDMS).

6. Procédé selon l'une quelconque des revendications 1 à 5, dans lequel ladite unité de réseau comprend une fonction de commande de serveur d'appel (CSCF).

7. Procédé selon l'une quelconque des revendications 1 à 6, comprenant
la demande, par le premier terminal de communication sans fil (MT1), d'informations de capacité d'application à partir du terminal de communication sans fil distant (MT2) par le biais de l'unité de réseau (VC),
la réception, par le premier terminal de communication sans fil (MT1), d'informations de capacité d'application du terminal de communication sans fil distant (MT2) ainsi que d'informations de capacité d'application d'un dispositif externe distant (DEVICE #2) situé dans le voisinage du terminal de communication sans fil distant (MT2),
l'envoi, par le premier terminal de communication sans fil (MT1), des informations de capacité d'application du terminal de communication sans fil distant (MT2), des informations de capacité d'application du dispositif externe distant (DEVICE #2) et d'informations de capacité d'application du premier terminal de communication sans fil au dispositif externe adjacent (DEVICE #1) situé dans le voisinage du premier terminal de communication sans fil (MT1) sur une liaison sans fil de courte portée.

8. Procédé selon la revendication 7, dans lequel les informations de capacité d'application comprennent des informations concernant un état de capacité d'application spécifique.

9. Procédé selon la revendication 8, comprenant
l'envoi, par le premier terminal de communication sans fil (MT1), d'une demande de démarrage d'une application ayant un état inactif dans le terminal de communication sans fil distant (MT2) et/ou dans le dispositif externe distant (DEVICE #2), de préférence en réponse à un message reçu à partir du dispositif externe adjacent (DEVICE #1).

10. Procédé selon la revendication 7, comprenant
la détermination par le dispositif de données externe adjacent (DEVICE #1), sur la base des informations de capacité d'application reçues, des capacités d'application du dispositif de données externe adjacent qui correspondent aux capacités d'application indiquées par les informations de capacité d'application reçues,
le dispositif de données externe adjacent présentant les capacités d'application correspondantes à un utilisateur du dispositif de données externe adjacent.

11. Procédé selon la revendication 10, comprenant
l'envoi, par le dispositif de données externe adjacent (DEVICE #1) au premier terminal de communication sans fil (MT1), d'une demande de démarrage d'une application de correspondance dans le terminal de communication sans fil distant (MT2) et/ou dans le dispositif de données externe distant (DEVICE #2).

12. Procédé selon la revendication 9 ou 10, comprenant
la réception, par le dispositif de données externe adjacent (DEVICE #1) par le biais du premier terminal de communication sans fil, d'une demande de démarrage d'une application,
le démarrage, par le dispositif de données externe adjacent (DEVICE #1), de l'application demandée soit directement soit si l'utilisateur accepte la demande.

13. Support de stockage de données contenant un code de programme exécutable qui effectue les étapes de l'une quelconque des revendications de procédé 1 à 12 quand il est exécuté dans un dispositif informatique.

14. Unité de réseau pour un système de communication, ladite unité de réseau comprenant des moyens pour mettre en oeuvre les étapes de l'une quelconque des revendications 1 à 5.

15. Agencement de communication comprenant le terminal de communication sans fil, une unité de réseau et un dispositif de données externe pour effectuer des étapes de l'une quelconque des revendications 1 à 12.
